# EUROPEAN PATENT APPLICATION

(11) **EP 3 757 930 A1**
(43) Date of publication of application: **30.12.2020**
(21) Application number: 19183685.7
(22) Date of filing: 01.07.2019
(51) Int. Cl.: G06Q 30/06, G06Q 10/06, G01J 3/46

(54) **COLOR MATCHING AND DOSING SYSTEM**

(30) Priority: 29.06.2019 TR 201809311
(71) Applicant: Kansai Altan Boya Sanayi ve Ticaret Anonim Sirketi, Izmir (TR)
(72) Inventor: KOTILOGLU, CEYDA, IZMIR (TR); SAHIN, MERT, IZMIR (TR); GURCAY, OMER, IZMIR (TR); OGLA, BUGRA, IZMIR (TR)
(74) Representative: Sevinç, Cenk

(57) **Abstract**

The present invention relates to a color matching system that allows data flow between the color matching software and dosing equipment and that provides opportunity for preparing product formula of different gloss levels and that allows production by dosing. The present invention particularly relates to a color matching system that allows for storing information on product creation flexibility as well as formula and color information and color matching and dosing data online within the system.

## Description

### Technical Field of the Invention

The present invention relates to a middleware aided color matching system that allows data flow between the color matching software and dosing equipment and that provides opportunity for preparing products with different performance characteristics.

The present invention particularly relates to a middleware aided color matching system that allows for storing information on product creation flexibility as well as formula and color information and color matching and dosing data online within the system.

### State of the Art

The primary function of a coating/paint is to protect the surface on which the coating is applied and to be pleasing visually and/or functionally depending on the area in which it is used. A great variety of colors having similar protective functions are demanded by clients due to the diversity of usage areas and various needs arising in many different sectors.

Paint manufacturers possess products of different colors in any convenient system and accordingly they aim to satisfy demands with available color options. Moreover, they meet demands for different colors by making corrections in correlated colors or designing new colors from scratch. In that case laboratory works are conducted by utilizing available color information and color matching software products.

The procedure of color matching is the process of approximating a color to another color that is taken as a reference. Various additions are made to the color that is being worked on in order to carry out this procedure. Color matching software products are libraries in which color component data (reflectance) and formula consisting of color components are stored. Color matching software products are capable of creating color formula by processing these data with different algorithms. Correction formula that are congenial to desired reference can be created by making corrections for colors in which color information and formula are similar to available products. In case there are no formula available that are similar to color reference, a new formulae is created.

In addition to color components, various entries that ensure other performance characteristics expected of the coating are used in order to create a product formula having a proper color in a specific system. Furthermore, appropriate methods are utilized for combining all these materials homogeneously.

Patent document numbered **"2016/08752"** was examined in the preliminary search conducted in the state of the art. The abstract section of said invention discloses; "The present invention relates to a method and system for viewing color chips on a monitor".

Patent document numbered **"**US6502049**"** was examined in the preliminary search conducted in the state of the art. Said invention discloses a color matching system having the least measuring and mixing functions. Color matching is achieved through tint paste input amounts provided by the application on a base paint. Since the dosing equipment has a piston structure, the system is capable of performing corrections for dosing errors that may potentially stem from seasonal temperature differences.

Patent document numbered **"**US20020079479**"** was examined in the preliminary search conducted in the state of the art. Said invention discloses system and method for determining the proper mixture of substances or sources in order to obtain a required or desired property such as color or chromaticity.

In color matching methods used in the state of the art, when singly applicable components are mixed at specific ratios, they constitute a product in desired color. However, various disadvantages are encountered when the aim is to prepare products of different gloss levels.

Bases comprising more than one component are utilized for color creation in the state of the art. Additive amounts within the paint formula change when the desired gloss level is to be adjusted by means of altering base amounts. In cases where additives are used in different amounts however, various performance characteristics of the paint such as curing, dispersion, UV resistance change.

Color matching is performed through colored/colorless bases in systems used in the state of the art. Gloss levels of these bases and colors thereof cause various limitations in the formula. Consequently, certain characteristics of the paint changes and deviates from the standard formula structure at specific ratios.

As a result, disadvantages mentioned above and the inadequacy of available solutions in this regard necessitated making an improvement in the related technical field.

### Objects of the Invention

The main object of the present invention is to maintain product creation flexibility by not utilizing bases but using single components instead. Thus, an opportunity for producing paints in desired amounts is provided without causing changes in performance characteristics such as curing of the coating, its dispersion and UV resistance thereof.

Another object of the present invention is to eliminate potential limitations that may arise in product's gloss levels and in formula of colors by means of performing color matching by using single component.

Yet another object of the present invention is to allow for storing color data within the system online. Thus, relation between color and product formula as well as formula ratio can be preserved continuously.

Another object of the present invention is to provide opportunity for meeting users' demands rapidly.

Yet another object of the present invention is to minimize user errors by performing color matching in a computer-based manner. Thus, the user can create new color formula in addition to color matching.

Yet another object of the present invention is to allow for color matching and paint production at user end through not giving rise to user error by means of the middleware.

Structural and characteristic features of the present invention as well as all advantages thereof will be understood more clearly by means of figures given below and the detailed description provided by making references to these figures. Therefore, the assessment of the present invention should be conducted by taking these figures and the detailed description into account.

### Description of the Figures

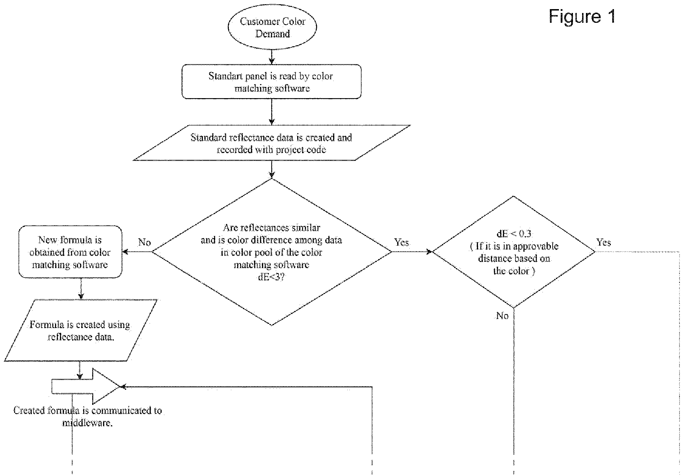

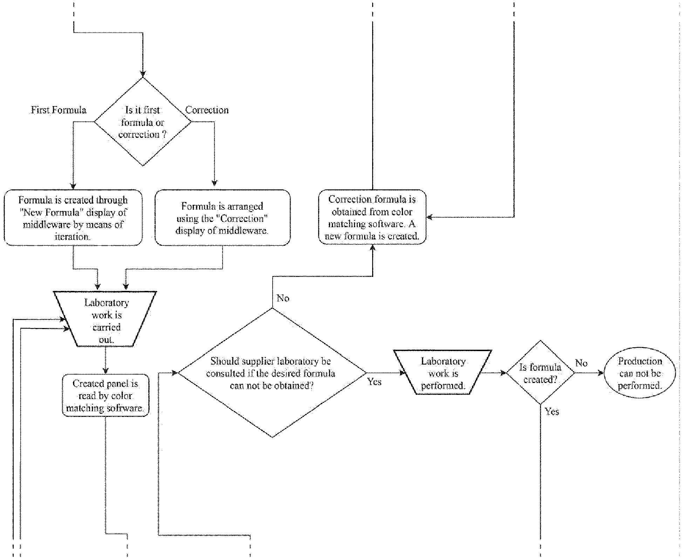

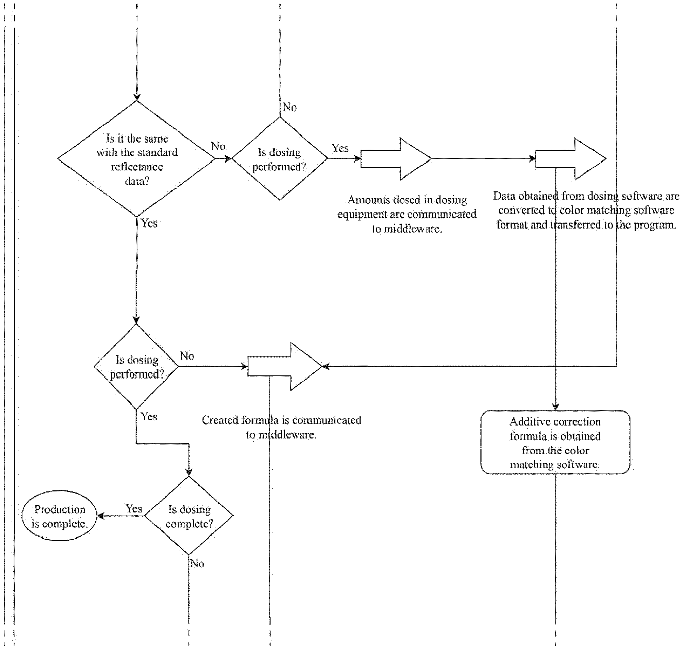

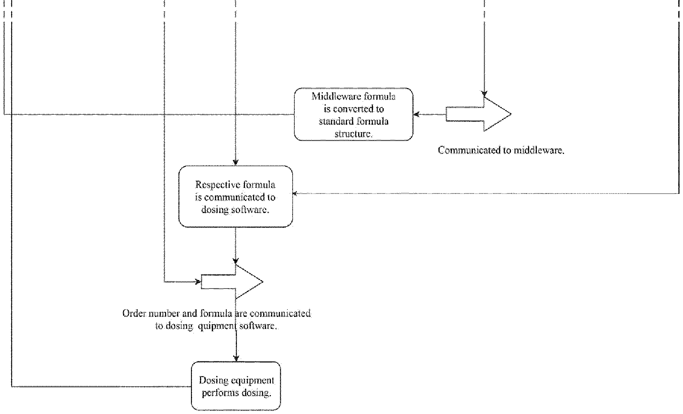

- **FIGURE 1**,: illustrates the flowchart of the inventive color matching system.

### Description of the Invention

In general terms, the inventive color matching system is comprised of color matching software and computer on which the color matching software is operated, dosing software and computer on which the dosing software is operated, dosing equipment and middleware.

Color matching software performs color reading of reference panels, allows for determining the proper color out of recorded colors, carries out formula correction in close color or provides a color formula from the scratch. Furthermore, it communicates with the middleware and provides color correction during production phase in order to approximate the color to a standard. Color matching software operates on a computer that is connected to a spectrophotometer.

Dosing software allows for operating the dosing equipment, provides realization data to the user as a report and communicates with the middleware. Dosing software operates on the dosing conducting computer.

Dosing equipment allows for performing dosing action based on commands received from the dosing software and transmits weight data obtained from scales to the middleware by means of the dosing software.

A number of processes are carried out for the functioning of the inventive color matching system. Initially the color readings of reference panels are performed by means of the color matching system. Color matching software provides formula correction by using the available similar color formula or provides a new color formula. Subsequently, the color formula is communicated to the middleware. Middleware converts the formula obtained from the color matching software to a single component-based standard formula. The formula and color data calculated through the middle ware are stored in the data base. Converted formula is communicated to the dosing software. Dosing software operates the dosing equipment. Dosing equipment performs the dosing procedure by utilizing the data obtained from the dosing software. Data obtained from the scale after the dosing operation is performed are communicated to the dosing software. Subsequently, dosing data as well as production information are communicated to the middleware. Dosing data and production information are viewed on the user display by means of the middleware. In case the application performed by using the paint obtained does not meet the desired color, gloss characteristics and viscosity values of the wet paint, color correction and necessary input are made by means of the color matching software and the middleware and subsequently, the dosing operation is finalized.

Color matching software used in the color matching system operates on a computer that is connected to spectrophotometer located in a laboratory environment. The software used for performing dosing operation operates on a computer on which the dosing operation in the production area is performed. These two computers are interconnected via cable or wireless network. Data exchange is performed between these two computers over a cable or wireless network.

Middleware allows for converting the formula obtained from the color matching computer to a standard paint formula (adding inputs that will ensure other performance expectations based on specific ratios) and ensures the data flow between the color matching software and dosing software. Middleware allows for storing formula and color data, color matching and dosing steps online and ensures that formula can be updated and displayed online. Middleware can be operated on any remote device connected to Internet and it allows for viewing the user display by inputting user credentials. This remote device can be a computer or another mobile device.

A number of operations are performed for middleware to convert the formula obtained from the color matching software to single component-based formula. Initially, the formula calculation type is selected by means of the middleware. Standard formula structure is sorted based on gloss, resin system and suchlike performance characteristics. Formula information are displayed on the user display after the sorting operation is complete. Standard formulae information is recreated as a new formula or a correction formulae through the selected appropriate system. At this stage, required correction steps of formulae's single components obtained as a result of the laboratory works carried out, are performed by utilizing color matching software and middleware on the user display. Single component amounts/ratios are calculated based on the correction by means of the middleware. A data exchange operation takes place between the color matching software and the middleware during these operations. Thus, a single component-based new formula can be created.

Created formula is recorded into the middleware data base. The formula that is fit for dosing operation is communicated to dosing software through the middleware. Initially, the dosing operation is performed below the targeted amount. Dosing operation is finalized after the necessary controls on the characteristics required for dosing operation are performed and the correction formulae for producing the targeted amount by utilizing the middleware and color matching software is created and dosed accordingly when necessary.

Bases are utilized for creating color formula in the state of the art and gloss is adjusted (number of matting agents) by changing base amount, and thus amount of some additives within the paint formula changes. Inputting different amounts of additives causes changes in characteristics such as curing of the paint, its dispersion and UV resistance thereof. Middleware ensures that these amounts are at specific ratios in the single component basis. Thus, created formula allow for producing paints having proper gloss characteristics and other performance features independent of the production amount. Moreover, formula flexibility is ensured and abiding by the standard formula structure is made possible by utilizing single component.

## Claims

1. Color matching and dosing system that allows producing coatings at user end by performing color matching, that is capable of working in integration with color matching software, middleware and dosing software **characterized in that** method that ensures the functioning of color matching dosing system comprises the process steps of;
• Performing color readings of reference panels by means of color matching software,
• Providing formula correction or new color formula by using available similar color formula by means of color matching software,
• Communicating color formula to middleware,
• Converting formula obtained from color matching software to single component-based standard formula by means of middleware,
• Storing formula and color data calculated by middleware into database,
• Communicating converted formula to dosing software,
• Operating dosing equipment by means of dosing software,
• Performing dosing operation by means of dosing equipment by utilizing information obtained from dosing software,
• Communicating data obtained from scale after dosing operation to dosing software,
• Communicating dosing data and production data to middleware,
• Displaying dosing data and production data on user display by means of middleware,
• Performing color correction and making necessary input by means of color matching software and middleware in case the application performed by using the paint obtained does not meet the desired color, gloss characteristics and viscosity values of the wet paint and finalizing the dosing operation.

2. Color matching system according to Claim 1 **characterized in that** the process step of converting the formula obtained from color matching software to single component-based standard formula by means of middleware further comprises the process steps of;
• Selecting formula calculation type in appropriate system by means of middleware,
• Sorting standard formula structure based on gloss, resin system and suchlike performance characteristics upon selection,
• Displaying formula information on user display after sorting operation is complete,
• Performing formula calculation that is composed by means of color matching software and middleware for formula single components by means of user display,
• Calculating single component amounts/ratios by performing calculation operations according to correction by means of middleware,
• Creating single component-based standard formula.
